# EUROPÄISCHE PATENTSCHRIFT

(11) **EP 3 219 466 B1**
(45) Veröffentlichungstag und Bekanntmachung des Hinweises auf die Patenterteilung: **23.01.2019**
(21) Anmeldenummer: 17160003.4
(22) Anmeldetag: 09.03.2017
(51) Int. Cl.: B29C 65/74, B29C 65/18, B29C 65/30, B65B 61/10, B65B 61/04, B65B 51/24, B26F 3/08, B65B 51/30, B29C 65/00

(54) **VORRICHTUNG UND VEFAHREN ZUM DURCHTRENNEN VON KUNSTSTOFFFOLIEN**
DEVICE AND PROCESS FOR SEVERING PLASTIC FOILS
DISPOSITIF ET PROCÉDÉ POUR COUPER DES FEUILLES SYNTHÉTIQUES

(30) Priorität: 15.03.2016 DE 102016003097
(43) Veröffentlichungstag der Anmeldung: 20.09.2017
(73) Patentinhaber: AFC Air Filtration & Containment GmbH, 76316 Malsch (DE)
(72) Erfinder: Sadeghi, Ali Mohammad, 76448 Durmersheim (DE); Mohari, Stefan Arpad, 76133 Karlsruhe (DE)
(74) Vertreter: Patentanwälte Bregenzer und Reule Partnerschaftsgesellschaft mbB

(56) Entgegenhaltungen:
- EP-A1- 1 655 229
- DE-A1- 1 479 841

## Beschreibung

Die Erfindung betrifft eine Vorrichtung zum Durchtrennen von Kunststofffolien gemäß Oberbegriff des Anspruchs 1.

Solche Vorrichtungen werden insbesondere dazu verwendet, Abschnitte von Endlosfolienschläuchen voneinander zu trennen, die wiederum der Aufnahme von kontaminierten Abfällen dienen. So ist beispielsweise aus der DE 10 2013 014 028 A1 eine Vorrichtung zum Abscheiden von Schwebstoffen bekannt, die einen Auffangbehälter aufweist, in dem ein gefalteter, aus einer unterseitigen Öffnung herausziehbarer Endlosschlauch aus Kunststofffolie angeordnet ist, dessen eines Ende verschlossen ist und einen Boden eines Auffangsacks für die Schwebstoffe und/oder einen Filter bildet. Ist der Auffangsack voll, so wird der Endlosschlauch in einem Trennabschnitt verschweißt, wobei der Auffangsack abgetrennt und verschlossen wird, während der auf den Auffangsack folgende Abschnitt des Endlosschlauchs ebenfalls verschlossen wird und den Boden eines weiteren Auffangsacks bildet. Insbesondere wenn im Auffangsack hochgiftige Stäube enthalten sind, muss vermieden werden, dass im Trennbereich befindliche Stäube beim Trennen in die Umgebung gelangen. Zur Lösung dieses Problems wurde bereits vorgeschlagen, im Trennbereich zwei im Abstand zueinander angeordnete Schweißnähte anzubringen, wobei eine der Schweißnähte den gefüllten Auffangsack verschließt, während die andere Schweißnaht den Boden des weiteren Auffangsacks bildet. Die Trennung erfolgt dann mittels Schneidwerkzeugen im Bereich zwischen den Schweißnähten. Der Schnitt muss aber präzise gesetzt werden, um die Schweißnähte nicht zu beschädigen. Zudem kann nicht ausgeschlossen werden, dass sich auch im Bereich zwischen den Schweißnähten giftige Stoffe angesammelt haben, die beim Schneiden in die Umgebung gelangen. Eine Vorrichtung der eingangs genannten Art ist aus der EP 1 655 229 A1 bekannt.

Es ist daher Aufgabe der Erfindung, eine Vorrichtung der eingangs genannten Art zu entwickeln, die ein sichereres und/oder einfacheres Trennen von Kunststofffolien ermöglicht.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die Folien, insbesondere vollständig oder zum größten Teil aus Kunststofffolie bestehende Endlosschläuche, im Trennabschnitt gleichzeitig zu verschweißen und durchzutrennen, indem die beheizte Trennplatte mit ihrer stumpfen Kante gegen den Trennabschnitt gedrückt wird, diesen lokal aufschmilzt und in den geschmolzenen Bereich eindringt. Dieser Prozess findet dann seinen Abschluss, wenn die Trennplatte den Trennabschnitt vollständig durchquert hat, wobei stets ihre heißen Seitenflächen jeweils an einer Trennfläche des Trennabschnitts anliegen und die Folie dort verschweißen. Der Trennprozess geht damit stets mit einem Schweißprozess einher, wobei die stumpfe Ausbildung der Trennplatte mit einer stumpfen Kante anstelle einer Schneidkante verhindert, dass die Folie im Trennabschnitt geschnitten wird ohne aufgeschmolzen zu werden. Durch das gleichzeitige Trennen und Aufschmelzen bzw. Verschweißen wird das Austreten von giftigen Substanzen aus dem Endlosschlauch weitestgehend verhindert. Um den Trennvorgang effektiver zu gestalten, wird der Endlosschlauch bzw. die Kunststofffolie im Trennabschnitt kompaktiert, beispielsweise durch Verdrillen bzw. Verdrehen um eine Längsachse oder Falten. Zudem kann der Trennabschnitt mit einem Klebeband und/oder mit Kabelbindern umwickelt werden, bevor er in den Zwischenraum zwischen der Klemmbacke und dem Gegenhalter eingeführt wird. Durch diese Maßnahme wird die Folie im verschweißten Bereich verdickt, so dass sie dort stabiler ist.

Die Trennplatte ist zweckmäßig eine vorzugsweise massive Platte aus Metall, insbesondere aus Kupfer, das eine gute Wärmeleitfähigkeit aufweist. Dabei wird bevorzugt, dass die Trennplatte zwischen zwei elektrisch beheizbaren Heizplatten eingespannt ist und dass die Seitenflächen von den Heizplatten in der Vorschubrichtung vorstehen. Die gute Wärmeleitfähigkeit der Heizplatte, insbesondere bei deren Ausbildung aus Metall, sorgt dann für eine gute Wärmeverteilung von den Heizplatten auf die gesamte Trennplatte. Um ein vollständiges Durchtrennen der Kunststofffolien zu ermöglichen, wird bevorzugt, dass die Seitenflächen sich in der Vorschubrichtung mindestens so weit von den Heizplatten bis zur Stirnfläche erstrecken wie sich der Zwischenraum in der Vorschubrichtung erstreckt.

Gemäß einer bevorzugten Ausführungsform ist der Gegenhalter Teil des Gehäuses. Vorzugsweise ist er eine Stirnwand des Gehäuses. Desweiteren wird bevorzugt, dass die Klemmbacke am Gehäuse angelenkt und um eine Schwenkachse gegenüber dem Gehäuse verschwenkbar ist. An einem von der Schwenkachse entfernten freien Ende ist die Klemmbacke zweckmäßig mittels eines Spannmechanismus am Gehäuse fixierbar, wobei der Spannmechanismus einen am Gehäuse angelenkten Handhebel aufweist. Diese Maßnahme ermöglicht ein besonders einfaches Einklemmen des Trennabschnitts im Zwischenraum zwischen der Klemmbacke und dem Gegenhalter. Ein manuelles Einklemmen verringert zudem die Verletzungsgefahr einer Bedienperson.

Die Vorschubeinheit weist einen Pneumatikzylinder zum Vorschieben und Zurückziehen der Trennplatte auf. Ein Pneumatikzylinder ist in der Regel günstiger als ein Elektromotor und kann eine hohe Kraft aufbringen. Zudem steht in den meisten Werkhallen Druckluft zur Verfügung. Erfindungsgemäß weist ein Druckluftanschluss des Pneumatikzylinders mindestens eine Auslassöffnung zum Spülen des Gehäuseinnenraums mit Druckluft auf. Diese Maßnahme dient dem Explosionsschutz, indem die das Gehäuse spülende Druckluft gegebenenfalls explosive Substanzen aus dem Gehäuse verdrängt. Der Gehäuseinnenraum kann dabei permanent mit Druckluft gespült werden. Zudem kann eine Druckmesseinrichtung vorgesehen sein, die den Luftdruck im Gehäuseinnenraum überwacht. Wenn der Luftdruck im Gehäuseinnenraum einen vorgegebenen Mindestluftdruck unterschreitet, kann ein Warnsignal erzeugt werden und/oder die Heizung der Trennvorrichtung, die explosive Substanzen gegebenenfalls zünden könnte, kann ausgeschaltet werden. Dabei ist es möglich, den Umgebungsluftdruck zu überwachen und den Mindestluftdruck an den gemessenen Umgebungsluftdruck anzupassen oder aber den Mindestluftdruck als Konstante so zu wählen, dass er stets deutlich über dem Atmosphärendruck liegt, beispielsweise bei 1,5 bar.

Um die Sicherheit beim Bedienen der erfindungsgemäßen Vorrichtung zu erhöhen, wird bevorzugt, dass die Vorschubeinheit durch gleichzeitiges Drücken zweier Taster betätigbar ist, die an einander abgewandten Seiten des Gehäuses angeordnet sind. Dabei sind die einander abgewandten Seiten des Gehäuses in einem Abstand von mindestens 20 cm, vorzugsweise von mindestens 25 cm, zueinander angeordnet. Ein einhändiges Betätigen beider Taster gleichzeitig, und somit ein einhändiges Betätigen der Vorschubeinheit, ist damit auch für Bedienpersonen mit großen Händen unmöglich. Werden aber beide Hände zum Betätigen der Vorschubeinheit benötigt, so kann die Bedienperson beim Vorschub der Trennplatte keine Hand im Zwischenraum einklemmen.

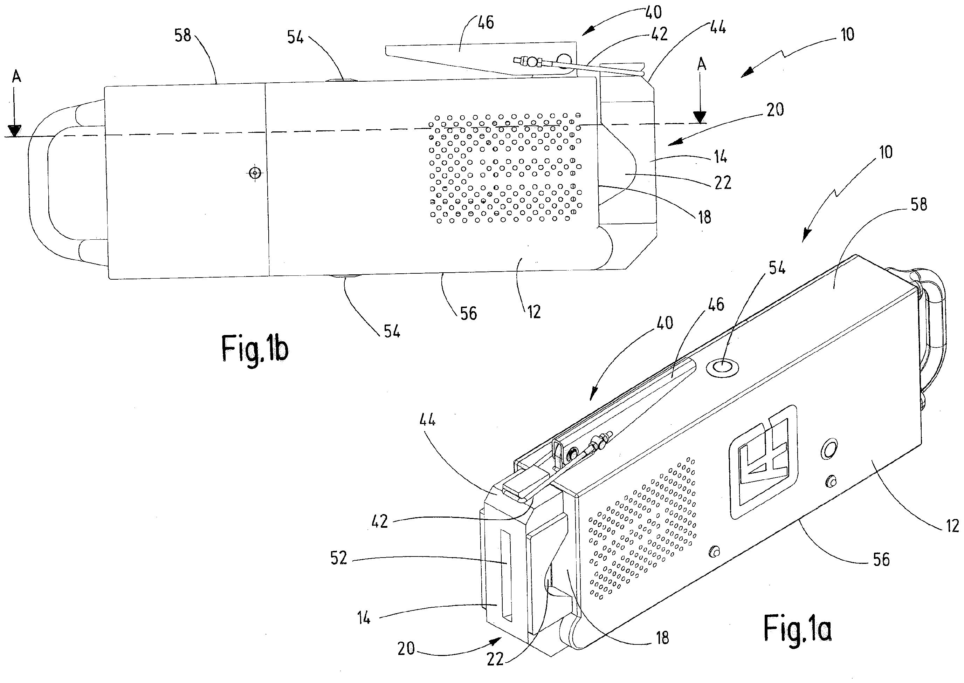

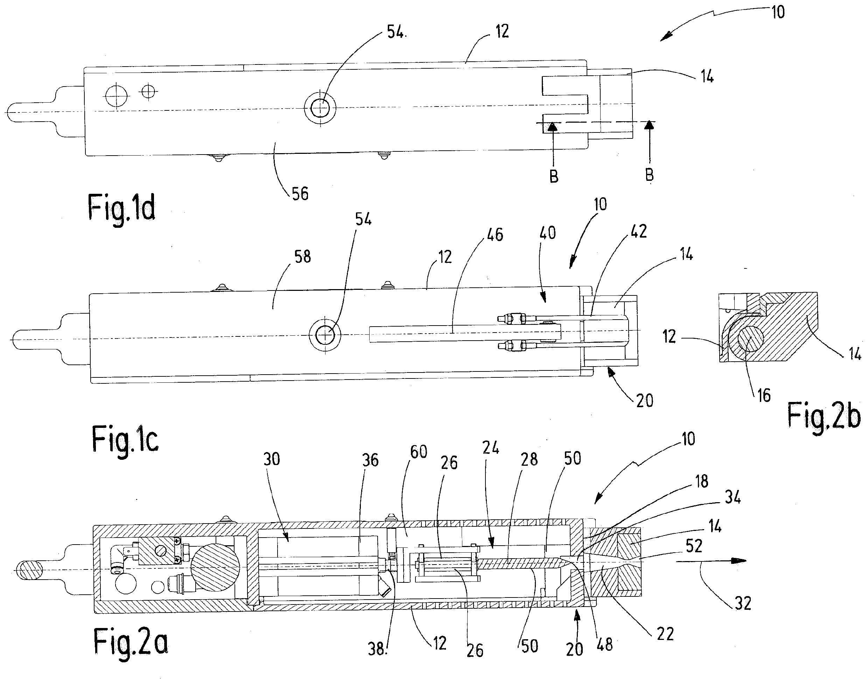

Im Folgenden wird die Erfindung anhand eines in der Zeichnung schematisch dargestellten Ausführungsbeispiels näher erläutert. Es zeigen
- Figur 1a bis d: eine Vorrichtung zum Durchtrennen von Kunststofffolien in perspektivischer Ansicht, in Seitenansicht, in einer Ansicht von oben und in einer Ansicht von unten und
- Fig. 2a, 2b: Schnittdarstellungen entlang der Linien A-A gemäß Fig. 1b und B-B gemäß Fig. 1d.

Die erfindungsgemäße Vorrichtung 10 weist ein Gehäuse 12 auf, an dem eine Klemmbacke 14 um eine Schwenkachse 16 verschwenkbar angelenkt ist. Zusammen mit einer Stirnwand 18 des Gehäuses 12 bildet die Klemmbacke 14 eine Klemmeinrichtung 20, die es ermöglicht, zusammengefaltete oder verdrillte Kunststofffolien in einem Zwischenraum 22 zwischen der Klemmbacke 14 und der als Gegenhalter wirkenden Stirnwand 18 einzuklemmen. Insbesondere können im Zwischenraum 22 aus Kunststofffolie hergestellte Endlosschläuche abschnittsweise eingeklemmt werden, die zu diesem Zweck zuvor gefaltet, verdrillt und/oder mit Klebeband und/oder Kabelbindern umwickelt wurden. Im Gehäuse 12 ist zudem eine Trenneinrichtung 24 angeordnet, die eine zwischen zwei elektrisch beheizbaren Heizplatten 26 eingespannte Trennplatte 28 aus Kupfer sowie eine Vorschubeinheit 30 zum Vorschieben der Trennplatte 28 in einer Vorschubrichtung 32 und zum Zurückziehen der Trennplatte entgegen der Vorschubrichtung 32 aufweist. In der Stirnwand 18 befindet sich ein Spalt 34, durch den die Trennplatte 28 beim Vorschieben durchtreten kann. Zum Vorschub und Rückzug der Trennplatte 28 weist die Vorschubeinheit 30 einen doppelt wirkenden Pneumatikzylinder 36 auf, mit dessen Kolbenstange 38 die Trennplatte 28 starr verbunden ist. Das Einklemmen der Endlosschlauchabschnitte im Zwischenraum 22 erfolgt mittels eines Spannmechanismus 40, der einen Drahtbügel 42 zum Umgreifen eines im Abstand zur Schwenkachse 16 angeordneten freien Endes 44 der Klemmbacke 14 sowie einen am Gehäuse 12 angelenkten Handhebel 46 zur Kraftbeaufschlagung des Drahtbügels 42 aufweist.

Zum Durchtrennen eines Endlosschlauchs an einem im Zwischenraum 22 eingeklemmten Trennabschnitt werden die Heizplatten 26 elektrisch erhitzt, so dass sich ihre Wärme auf die gut wärmeleitende Trennplatte 28 überträgt. Diese weist an ihrem der Klemmeinrichtung 20 zugewandten Ende eine stumpfe Kante 48 sowie zwei einander abgewandte Seitenflächen 50 auf, die sich von den Heizplatten 26 in Richtung zur stumpfen Kante 48 erstrecken. Die Vorschubeinheit 30 drückt die heiße Trennplatte 28 mit der stumpfen Kante 48 gegen den Trennabschnitt und bewirkt ein lokales Aufschmelzen der Folie, so dass die Kante 48 in diese eindringen kann, ohne sie zu schneiden. Ein vollständiges Durchtrennen des Trennabschnitts erfolgt, indem die Kante 48 immer weiter durch den aufgeschmolzenen Kunststoff vordringt, bis sie im Bereich der Klemmbacke 14 aus diesem austritt und in eine Durchtrittsöffnung 52 in der Klemmbacke 14 eintritt. Die Seitenflächen 50 liegen dabei jeweils an einer Trennfläche des dann vollständig durchtrennten Trennabschnitts an und verschweißen das Kunststoffmaterial an den Trennflächen.

Zur Betätigung der Vorschubeinheit 30 sind zwei Taster 54 vorgesehen, von denen einer an einer Gehäuseunterseite 56 und der andere an einer Gehäuseoberseite 58 angeordnet ist. Beide Taster 54 müssen gleichzeitig gedrückt werden, um den Vorschub der Trennplatte 28 auszulösen. Die Gehäuseseiten 56, 58 sind ca. 20 cm voneinander entfernt, so dass die Taster 54 nicht gleichzeitig mit einer Hand betätigt werden können.

Zum Explosionsschutz ist zudem vorgesehen, dass eine den Pneumatikzylinder 36 mit Druckluft versorgende Druckluftleitung einen in den Innenraum 60 des Gehäuses 12 mündenden Druckluftauslass aufweist, mit dem der Gehäuseinnenraum 60 permanent mit Druckluft geflutet werden kann. Zudem kann der Luftdruck im Gehäuseinnenraum 60 mittels einer Druckmesseinrichtung überwacht werden, die dann, wenn der Luftdruck einen vorgegebenen Mindestluftdruck unterschreitet, ein Warnsignal erzeugt und/oder die Heizung der Heizplatte 26 ausschaltet. Der Mindestluftdruck ist dabei größer als der Umgebungsluftdruck, so dass der Gehäuseinnenraum 60 stets gespült wird und das Eindringen von Gasen von außen weitgehend verhindert wird. Es ist möglich, den Umgebungsluftdruck zu überwachen und den Mindestluftdruck an den gemessenen Umgebungsluftdruck anzupassen oder aber den Mindestluftdruck als Konstante so zu wählen, dass er stets deutlich über dem Atmosphärendruck liegt, beispielsweise bei 1,5 bar.

Zusammenfassend ist folgendes festzuhalten: Die Erfindung betrifft eine Vorrichtung 10 zum Durchtrennen von Kunststofffolien mit einem Gehäuse 12, mit einer Klemmeinrichtung 20, die eine bezüglich des Gehäuses 12 bewegliche Klemmbacke 14 und einen gehäusefesten Gegenhalter 18 aufweist, zwischen denen ein Zwischenraum 22 zum Einklemmen der Kunststofffolien angeordnet ist, wobei entweder die Klemmbacke 14 oder der Gegenhalter 18 einen in Richtung zum jeweils anderen Bauteil 14, 18 durchgehenden Spalt 34 aufweist, und mit einer zumindest teilweise im Gehäuse 12 angeordneten Trenneinrichtung 24, die eine beheizbare Trennplatte 28 mit einer stumpfen Kante 48 und sich in Richtung zur stumpfen Kante 48 erstreckenden, einander angewandten Seitenflächen 50 und eine Vorschubeinheit 30 zum Vorschieben der Trennplatte 28 mit der stumpfen Kante 48 voran in einer Vorschubrichtung 32 durch den Spalt 34 in den Zwischenraum 22 und zum Zurückziehen der Trennplatte 28 aus dem Zwischenraum 22 in das Gehäuse 12 entgegen der Vorschubrichtung 32 aufweist.

## Patentansprüche

1. Vorrichtung zum Durchtrennen von Kunststofffolien mit einem Gehäuse (12), mit einer Klemmeinrichtung (20), die eine bezüglich des Gehäuses (12) bewegliche Klemmbacke (14) und einen gehäusefesten Gegenhalter (18) aufweist, zwischen denen ein Zwischenraum (22) zum Einklemmen der Kunststofffolien angeordnet ist, wobei entweder die Klemmbacke (14) oder der Gegenhalter (18) einen in Richtung zum jeweils anderen Bauteil (14, 18) durchgehenden Spalt (34) aufweist, und mit einer zumindest teilweise im Gehäuse (12) angeordneten Trenneinrichtung (24), die eine beheizbare Trennplatte (28) mit einer stumpfen Kante (48) und sich in Richtung zur stumpfen Kante (48) erstreckenden, einander abgewandten Seitenflächen (50) und eine Vorschubeinheit (30) zum Vorschieben der Trennplatte (28) mit der stumpfen Kante (48) voran in einer Vorschubrichtung (32) durch den Spalt (34) in den Zwischenraum (22) und zum Zurückziehen der Trennplatte (28) aus dem Zwischenraum (22) in das Gehäuse (12) entgegen der Vorschubrichtung (32) aufweist, **dadurch gekennzeichnet, dass** die Vorschubeinheit (30) einen Pneumatikzylinder (36) zum Vorschieben und Zurückziehen der Trennplatte (28) aufweist und dass ein Druckluftanschluss des Pneumatikzylinders mindestens eine Auslassöffnung zum Spülen des Gehäuseinnenraums (60) mit Druckluft aufweist.

2. Vorrichtung nach Anspruch 1, **dadurch gekennzeichnet, dass** die Trennplatte (28) eine vorzugsweise massive Platte aus Metall, insbesondere aus Kupfer, ist.

3. Vorrichtung nach Anspruch 2, **dadurch gekennzeichnet, dass** die Trennplatte (28) zwischen zwei elektrisch beheizbaren Heizplatten (26) eingespannt ist und dass die Seitenflächen (50) von den Heizplatten (26) in der Vorschubrichtung (32) vorstehen.

4. Vorrichtung nach Anspruch 3, **dadurch gekennzeichnet, dass** die Seitenflächen (50) sich in der Vorschubrichtung (32) mindestens so weit von den Heizplatten (26) erstrecken wie sich der Zwischenraum (22) in der Vorschubrichtung (32) erstreckt.

5. Vorrichtung nach einem der vorangehenden Ansprüche, **dadurch gekennzeichnet, dass** der Gegenhalter (18) Teil des Gehäuses (12), vorzugsweise eine Stirnwand des Gehäuses (12), ist.

6. Vorrichtung nach Anspruch 5, **dadurch gekennzeichnet, dass** die Klemmbacke (14) am Gehäuse (12) angelenkt und um eine Schwenkachse (16) gegenüber dem Gehäuse (12) verschwenkbar ist.

7. Vorrichtung nach Anspruch 6, **dadurch gekennzeichnet, dass** die Klemmbacke (14) an einem von der Schwenkachse (16) entfernten freien Ende (44) mittels eines Spannmechanismus (40) am Gehäuse (12) fixierbar ist, der einen am Gehäuse (12) angelenkten Handhebel (46) aufweist.

8. Vorrichtung nach einem der vorangehenden Ansprüche, **gekennzeichnet durch** eine Druckmesseinrichtung zur Überwachung des Luftdruckes im Gehäuseinnenraum (60).

9. Vorrichtung nach einem der vorangehenden Ansprüche, **dadurch gekennzeichnet, dass** die Vorschubeinheit (30) durch gleichzeitiges Drücken zweier Taster (54) betätigbar ist, die an einander abgewandten Seiten (56, 58) des Gehäuses (12) angeordnet sind, wobei die einander abgewandten Seiten (56, 58) des Gehäuses (12) in einem Abstand von mindestens 20 cm, vorzugsweise von mindestens 25 cm, zueinander angeordnet sind.

10. Verfahren zum Trennen von Kunststofffolien unter Verwendung einer Vorrichtung (10) mit einem Gehäuse (12), mit einer Klemmeinrichtung (20), die eine bezüglich des Gehäuses (12) bewegliche Klemmbacke (14) und einen gehäusefesten Gegenhalter (18) aufweist, zwischen denen ein Zwischenraum (22) zum Einklemmen der Kunststofffolien angeordnet ist, wobei entweder die Klemmbacke (14) oder der Gegenhalter (18) einen in Richtung zum jeweils anderen Bauteil (14, 18) durchgehenden Spalt (34) aufweist, und mit einer zumindest teilweise im Gehäuse (12) angeordneten Trenneinrichtung (24), die eine beheizbare Trennplatte (28) mit einer stumpfen Kante (48) und sich in Richtung zur stumpfen Kante (48) erstreckenden, einander abgewandten Seitenflächen (50) und eine Vorschubeinheit (30) zum Vorschieben der Trennplatte (28) mit der stumpfen Kante (48) voran in einer Vorschubrichtung (32) durch den Spalt (34) in den Zwischenraum (22) und zum Zurückziehen der Trennplatte (28) aus dem Zwischenraum (22) in das Gehäuse (12) entgegen der Vorschubrichtung (32) aufweist, wobei ein aus Kunststofffolie gefertigter Endlosschlauch in einem Trennabschnitt vorzugsweise durch Falten oder Verdrillen kompaktiert und im Zwischenraum (22) zwischen der Klemmbacke (14) und dem Gegenhalter (18) eingeklemmt wird und wobei die erhitzte Trennplatte (28) mittels der Vorschubeinheit (30) mit der stumpfen Kante (48) gegen den Trennabschnitt gedrückt wird, diesen lokal aufschmilzt und durch einen aufgeschmolzenen Bereich des Trennabschnitts in der Vorschubrichtung (32) hindurch bewegt wird, wobei die Seitenflächen (50) jeweils an einer Trennfläche des Trennabschnitts anliegen.

11. Verfahren nach Anspruch 10, **dadurch gekennzeichnet, dass** der Trennabschnitt vor dem Einklemmen im Zwischenraum (22) mit einem Klebeband und/oder mit Kabelbindern umwickelt wird.

12. Verfahren nach Anspruch 10 oder 11, **dadurch gekennzeichnet, dass** der Gehäuseinnenraum (60) permanent mittels Druckluft gespült wird und dass der Luftdruck im Gehäuseinnenraum (60) mittels einer Druckmesseinrichtung überwacht wird.

13. Verfahren nach Anspruch 12, **dadurch gekennzeichnet, dass** bei Unterschreiten eines vorgegebenen Mindestluftdrucks ein Warnsignal erzeugt und/oder die Heizung der Trenneinrichtung (24) ausgeschaltet wird.

## Claims

1. Apparatus for cutting plastic films, having a housing (12), having a clamping device (20) which comprises a clamping jaw (14) mobile relative to the housing (12) and a counter-support (18) fixed with respect to the housing, an intermediate space (22) for clamping the plastic films being arranged between them, wherein either the clamping jaw (14) or the counter-support (18) has a continuous gap (34) in the direction of the respective other component (14, 18), and having a cutting device (24) which is arranged at least partially in the housing (12) and has a heatable cutting plate (28) with a blunt edge (48) and side faces (50), which extend in the direction of the blunt edge (48) and face away from one another, and a pushing unit (30) for pushing the cutting plate (28) with the blunt edge (48) forward in a pushing direction (32) through the gap (34) into the intermediate space (22) and for retracting the cutting plate (28) from the intermediate space (22) into the housing (12) counter to the pushing direction (32), **characterised in that** the pushing unit (30) comprises a pneumatic cylinder (36) for pushing and retracting the cutting plate (28), and **in that** a compressed air connection of the pneumatic cylinder has at least one outlet opening for flushing the housing interior (60) with compressed air.

2. Apparatus according to Claim 1, **characterised in that** the cutting plate (28) is a preferably solid plate made of metal, in particular copper.

3. Apparatus according to Claim 2, **characterised in that** the cutting plate (28) is braced between two heatable heating plates (26), and **in that** the side faces (50) protrude from the heating plates (26) in the pushing direction (32).

4. Apparatus according to Claim 3, **characterised in that** the side faces (50) extend at least as far from the heating plates (26) in the pushing direction (32) as the intermediate space (22) extends in the pushing direction (32).

5. Apparatus according to any one of the preceding claims, **characterised in that** the counter-support (18) is part of the housing (12), preferably an end wall of the housing (12).

6. Apparatus according to Claim 5, **characterised in that** the clamping jaw (14) is articulated on the housing (12) and can be tilted relative to the housing (12) about a tilt axis (16).

7. Apparatus according to Claim 6, **characterised in that** the clamping jaw (14) can be fixed on the housing (12) at a free end (44) away from the tilt axis (16) by means of a bracing mechanism (40), which comprises a hand lever (46) articulated on the housing (12).

8. Apparatus according to any one of the preceding claims, **characterised by** a pressure measuring device for monitoring the air pressure in the housing interior (60).

9. Apparatus according to any one of the preceding claims, **characterised in that** the pushing unit (30) can be actuated by simultaneous pressing on two buttons (54) which are arranged on the sides (56, 58) of the housing (12) which face away from one another, the sides (56, 58) of the housing (12) which face away from one another being arranged at a distance of at least 20 cm, preferably at least 25 cm, from one another.

10. Method for cutting plastic films by using an apparatus (10) having a housing (12), having a clamping device (20) which comprises a clamping jaw (14) mobile relative to the housing (12) and a counter-support (18) fixed with respect to the housing, an intermediate space (22) for clamping the plastic films being arranged between them, wherein either the clamping jaw (14) or the counter-support (18) has a continuous gap (34) in the direction of the respective other component (14, 18), and having a cutting device (24) which is arranged at least partially in the housing (12) and has a heatable cutting plate (28) with a blunt edge (48) and side faces (50), which extend in the direction of the blunt edge (48) and face away from one another, and a pushing unit (30) for pushing the cutting plate (28) with the blunt edge (48) forward in a pushing direction (32) through the gap (34) into the intermediate space (22) and for retracting the cutting plate (28) from the intermediate space (22) into the housing (12) counter to the pushing direction (32), wherein an endless tube made of plastic film is compacted in a cutting section, preferably by folding or twisting and is clamped in the intermediate space (22) between the clamping jaw (14) and the counter-support (18), and wherein the heated cutting plate (28) is pressed by means of the pushing unit (30) with the blunt edge (48) against the cutting section, locally melts the latter and is moved through a melted region of the cutting section in the pushing direction (32), wherein the side faces (50) respectively bear on a cutting face of the cutting section.

11. Method according to Claim 10, **characterised in that** an adhesive tape and/or cable binders are wound around the cutting section before the clamping in the intermediate space (22).

12. Method according to Claim 10 or 11, **characterised in that** the housing interior (60) is flushed constantly by means of compressed air, and **in that** the air pressure in the housing interior (60) is monitored by means of a pressure measuring device.

13. Method according to Claim 12, **characterised in that,** if a predetermined minimum air pressure is fallen below, a warning signal is generated and/or the heating of the cutting device (24) is switched off.

## Revendications

1. Dispositif de séparation de films en matière plastique, comprenant un boîtier (12) ; un appareil de coincement (20) muni d'une mâchoire de coincement (14) mobile par rapport au boîtier (12), et d'un contre-appui (18) faisant corps avec ledit boîtier, entre lesquels est réservé un espace intermédiaire (22) destiné à enserrer les films en matière plastique, sachant que soit ladite mâchoire de coincement (14), soit ledit contre-appui (18), présente un interstice (34) ininterrompu en direction de l'autre élément structurel (14, 18) considéré ; et un appareil de séparation (24) qui est logé dans le boîtier (12), au moins en partie, et comporte une platine séparatrice (28) pouvant être chauffée, munie d'une arête émoussée (48) et de surfaces latérales (50) tournées à l'opposé l'une de l'autre et s'étendant en direction de ladite arête émoussée (48), et une unité d'avance (30) réalisée pour faire progresser la platine séparatrice (28) dans une direction d'avance (32) à travers ledit interstice (34), jusque dans l'espace intermédiaire (22), l'arête émoussée (48) étant engagée en premier, et pour rétracter ladite platine séparatrice (28) hors dudit espace intermédiaire (22), jusque dans le boîtier (12), en sens inverse de ladite direction d'avance (32), **caractérisé par le fait que** l'unité d'avance (30) est équipée d'un vérin pneumatique (36), en vue de la progression et de la rétraction de la platine séparatrice (28) ; et **par le fait qu'**un raccord à air comprimé dudit vérin pneumatique est pourvu d'au moins un orifice de sortie, affecté au rinçage de l'espace interne (60) dudit boîtier par de l'air comprimé.

2. Dispositif selon la revendication 1, **caractérisé par le fait que** la platine séparatrice (28) est une platine préférentiellement massive en métal, notamment en du cuivre.

3. Dispositif selon la revendication 2, **caractérisé par le fait que** la platine séparatrice (28) est enchâssée entre deux platines chauffantes (26) pouvant être chauffées électriquement ; et **par le fait que** les surfaces latérales (50) font saillie au-delà desdites platines chauffantes (26) dans la direction d'avance (32).

4. Dispositif selon la revendication 3, **caractérisé par le fait que** l'étendue des surfaces latérales (50) à partir des platines chauffantes (26), dans la direction d'avance (32), est au moins égale à celle de l'espace intermédiaire (22) dans ladite direction d'avance (32).

5. Dispositif selon l'une des revendications précédentes, **caractérisé par le fait que** le contre-appui (18) constitue une partie du boîtier (12), de préférence une paroi frontale dudit boîtier (12).

6. Dispositif selon la revendication 5, **caractérisé par le fait que** la mâchoire de coincement (14) est articulée sur le boîtier (12) et peut pivoter par rapport audit boîtier (12), autour d'un axe de pivotement (16).

7. Dispositif selon la revendication 6, **caractérisé par le fait que** la mâchoire de coincement (14) peut être bloquée à demeure sur le boîtier (12), à une extrémité libre (44) éloignée de l'axe de pivotement (16), au moyen d'un mécanisme de serrage (40) doté d'un levier manuel (46) articulé sur ledit boîtier (12).

8. Dispositif selon l'une des revendications précédentes, **caractérisé par** un appareil de mesure de la pression, réalisé pour surveiller la pression de l'air dans l'espace interne (60) du boîtier.

9. Dispositif selon l'une des revendications précédentes, **caractérisé par le fait que** l'unité d'avance (30) peut être actionnée par pression exercée, simultanément, sur deux touches (54) placées sur des côtés (56, 58) du boîtier (12) tournés à l'opposé l'un de l'autre, lesdits côtés (56, 58) du boîtier (12), tournés à l'opposé l'un de l'autre, étant espacés l'un de l'autre d'une distance d'au moins 20 cm, de préférence d'au moins 25 cm.

10. Procédé dévolu à la séparation de films en matière plastique en faisant usage d'un dispositif (10) comprenant un boîtier (12) ; un appareil de coincement (20) muni d'une mâchoire de coincement (14) mobile par rapport au boîtier (12), et d'un contre-appui (18) faisant corps avec ledit boîtier, entre lesquels est réservé un espace intermédiaire (22) destiné à enserrer les films en matière plastique, sachant que soit ladite mâchoire de coincement (14), soit ledit contre-appui (18), présente un interstice (34) ininterrompu en direction de l'autre élément structurel (14, 18) considéré ; et un appareil de séparation (24) qui est logé dans le boîtier (12), au moins en partie, et comporte une platine séparatrice (28) pouvant être chauffée, munie d'une arête émoussée (48) et de surfaces latérales (50) tournées à l'opposé l'une de l'autre et s'étendant en direction de ladite arête émoussée (48), et une unité d'avance (30) conçue pour faire progresser la platine séparatrice (28) dans une direction d'avance (32) à travers ledit interstice (34), jusque dans l'espace intermédiaire (22), l'arête émoussée (48) étant engagée en premier, et pour rétracter ladite platine séparatrice (28) hors dudit espace intermédiaire (22), jusque dans le boîtier (12), en sens inverse de ladite direction d'avance (32), sachant qu'un tuyau souple sans fin, fabriqué en film de matière plastique, est compacté dans une zone de séparation, de préférence par pliage ou par torsion, et est enserré dans l'espace intermédiaire (22) entre la mâchoire de coincement (14) et le contre-appui (18), et sachant que la platine séparatrice chauffée (28) est pressée contre ladite zone de séparation par l'arête émoussée (48), au moyen de l'unité d'avance (30), provoque une fusion localisée de ladite zone et est mise en mouvement, dans la direction d'avance (32), à travers une région fondue de ladite zone de séparation, les surfaces latérales (50) étant respectivement en applique contre une surface de séparation de ladite zone de séparation.

11. Procédé selon la revendication 10, **caractérisé par le fait que** la zone de séparation est enveloppée à l'aide d'un ruban adhésif, et/ou par des attache-câbles, préalablement à l'enserrement dans l'espace intermédiaire (22).

12. Procédé selon la revendication 10 ou 11, **caractérisé par le fait que** l'espace interne (60) du boîtier est rincé en permanence, au moyen d'air comprimé ; et **par le fait que** la pression de l'air, régnant dans ledit espace interne (60) du boîtier, est surveillée au moyen d'un appareil de mesure de la pression.

13. Procédé selon la revendication 12, **caractérisé par** la génération d'un signal d'alerte, et/ou par une déconnexion du chauffage de l'appareil de séparation (24), en cas de dépassement négatif d'une pression d'air minimale préétablie.
